# FASCICULE DE BREVET EUROPEEN

(11) **EP 0 724 904 B1**
(45) Date de publication et mention de la délivrance du brevet: **02.01.2002**
(21) Numéro de dépôt: 96200188.9
(22) Date de dépôt: 26.01.1996
(51) Int. Cl.: B01D 61/52, B01D 61/46

(54) **Caisson d'extrémité d'un électrodialyseur, électrodialyseur équipé d'un tel caisson et utilisation dudit électrodialyseur**
Elektrodialysator mit Endkasten und seine Verwendung
Electrodialysis device with end boxes and its use

(30) Priorité: 03.02.1995 IT MI950185
(43) Date de publication de la demande: 07.08.1996
(73) Titulaire: SOLVAY (Société Anonyme), 1050 Bruxelles (BE)
(72) Inventeur: Botte, Luc, I-57013 Rosignano-solvay (LI) (IT)
(74) Mandataire: Dufrasne, Eugène

(56) Documents cités:
- EP-A- 0 031 897
- EP-A- 0 172 495
- DE-C- 827 350
- FR-A- 986 196
- FR-A- 1 382 379

## Description

L'invention concerne les électrodialyseurs.

Elle concerne plus particulièrement les caissons disposés aux extrémités des électrodialyseurs.

Les électrodialyseurs sont des installations électrochimiques formées d'un empilage de membranes sélectivement perméables aux ions et de cadres entre deux caissons d'extrémités contenant des électrodes. Les caissons d'extrémités comprennent généralement une tôle verticale portant une électrode et formant avec un cadre périphérique, une cavité destinée à contenir un électrolyte. La représentation schématique d'un électrodialyseur figure dans Techniques de l'ingénieur 3-1988, page J 2840 - 13, Fig. 18. Pendant l'exploitation de l'électrodialyseur, les électrodes sont raccordées aux bornes d'une source de courant continu et des électrolytes sont introduits dans les compartiments définis entre les membranes et les cadres, ainsi que dans les caissons d'extrémités, de manière à engendrer des réactions électrochimiques au sein des électrolytes.

Les réactions électrochimiques qui se produisent dans les caissons d'extrémités engendrent généralement un gaz sur les électrodes, par exemple de l'oxygène et de l'hydrogène dans le cas d'électrolytes aqueux. Il est important d'assurer une évacuation régulière de ces gaz, ce qui est habituellement obtenu en faisant circuler l'électrolyte en boucle entre le caisson d'extrémité et une chambre de dégazage (EP-A-0081092, page 8, lignes 11 à 16).

La formation de gaz dans les caissons d'extrémités des électrolyseurs a pour effet d'engendrer dans ceux-ci une pression qui, toutes autres choses égales par ailleurs, est d'autant plus élévée que la densité du courant électrique dans l'électrodialyseur est élevée. Elle limite de ce fait la productivité des électrodialyseurs industriels.

Les documents EP-A-0 031 897 et EP-A-0 172 495 décrivent des caissons correspondant au préambule de la revendication 1.

L'invention vise à fournir un caisson d'extrémité qui permet des densités de courant élevées dans les électrodialyseurs, sans qu'il en résulte pour autant des pressions exagérées.

L'invention concerne dès lors un caisson d'extrémité d'un électrodialyseur, selon la revendication, 1, un électrodialyseur selon la revendication 6 et son utilisation.

Dans le caisson selon l'invention, la tôle est disposée verticalement et est destinée à servir de flasque d'extrémité de l'électrodialyseur.

La tôle et le cadre doivent être réalisés en matériaux qui résistent à l'environnement chimique et électrochimique pendant l'exploitation de l'électrodialyseur. Le cadre peut former partie intégrante de la tôle ou être un élément distinct de celle-ci. Dans le cas où le cadre est un élément distinct de la tôle, la jonction entre la tôle et le cadre doit être étanche aux électrolytes et aux gaz. Le cadre et la tôle sont de préférence réalisés en un matériau non conducteur de l'électricité.

La plaque ajourée de l'électrode peut être une feuille métallique percée d'ouvertures, une plaque à claire-voie, un treillis métallique ou une feuille en métal déployé. On utilise avec avantage une feuille en métal déployé.

La plaque de l'électrode est disposée dans la cavité précitée du caisson, parallèlement à la tôle et en retrait par rapport à celle-ci. On ménage de la sorte une chambre entre la tôle et la plaque. Cette chambre se trouve compartimentée en canaux verticaux par des cloisons verticales joignant la tôle du caisson à la plaque de l'électrode. Les cloisons sont au moins au nombre de deux, de manière à réaliser au moins trois canaux verticaux dans la chambre. En pratique, on peut compartimenter la chambre en un plus grand nombre de canaux verticaux. Les cloisons verticales s'étendent sur une partie seulement de la hauteur de la chambre, de manière que la zone inférieure et la zone supérieure de la chambre ne soient pas cloisonnées. Selon l'invention, la zone inférieure et la zone supérieure de la chambre occupent moins d'un tiers, de préférence de 5 à 20 %, de la hauteur totale de la chambre. Des conduits d'admission et d'évacuation d'électrolyte débouchent respectivement dans les deux zones précitées de la chambre. Cette chambre est ainsi destinée à servir de chambre d'électrolyse pendant l'exploitation du caisson dans un électrodialyseur. L'épaisseur de la chambre et la largeur des canaux verticaux doivent être choisies de manière à y réaliser des conditions hydrodynamiques optimum pendant le fonctionnement normal de l'électrodialyseur. Les valeurs optimum de ces dimensions vont dès lors dépendre de divers paramètres, notamment de la viscosité de l'électrolyte circulant dans ladite chambre et des dimensions de la plaque d'électrode. Elles peuvent être déterminées aisément dans chaque cas particulier. En pratique, l'épaisseur de la chambre est avantageusement supérieure à 1 mm, de préférence au moins égale à 5 mm. L'épaisseur de la chambre conditionne le volume d'électrolyte à mettre en oeuvre et, à cet effet, on recommande que son épaisseur n'excède pas 100 mm, de préférence 50 mm. Des épaisseurs de 10 à 30 mm conviennent généralement bien.

Dans le cas où la plaque de l'électrode est une plaque à claire-voie, l'orientation des lamelles horizontales doit être adaptée de manière qu'un courant ascendant de fluide, circulant le long de la plaque, hors de la chambre susdite, soit dévié par les lamelles, traverse les ouvertures de la plaque d'électrode et pénètre dans la chambre.

Dans le caisson selon l'invention, le cadre et la plaque de l'électrode peuvent avoir un profil circulaire ou polygonal. On préfère leur conférer un profil rectangulaire.

Dans le caisson selon l'invention, les cloisons peuvent être réalisées en métal ou en un matériau non conducteur de l'électricité. Dans le cas où elles sont en matière métallique cette matière est sélectionnée parmi celles présentant une surtension supérieure à celle du matériau de la plaque d'électrode. La surtension qui est prise en considération est celle relative à la réaction d'électrolyse générant un gaz sur la plaque d'électrode lors d'une utilisation normale du caisson dans un électrodialyseur.

Dans le caisson selon l'invention, l'utilisation d'une chambre d'électrolyse compartimentée a pour résultat bénéfique d'améliorer l'homogénéité du courant d'électrolyte et de faciliter l'évacuation du gaz généré sur la plaque de l'électrode.

Dans une forme de réalisation avantageuse du caisson selon l'invention, la face de l'électrode, qui est la plus éloignée de la tôle se trouve sensiblement dans l'alignement du cadre. Dans cette forme de réalisation de l'invention, la plaque de l'électrode est destinée à servir de support à une membrane lorsque le caisson est monté dans un électrodialyseur.

Dans une autre forme de réalisation du caisson selon l'invention, les cloisons précitées servent de distributeurs du courant électrique d'électrolyse sur la plaque de l'électrode. A cet effet, elles sont en métal et fixées, d'une part à la plaque d'électrode et, d'autre part à des amenées de courant qui traversent la tôle du caisson, ladite tôle étant en un matériau non conducteur de l'électricité.

L'électrode et les cloisons peuvent être supportées dans la chambre du caisson par tous moyens appropriés. Selon une forme de réalisation avantageuse de l'invention, ce moyen comprend une poutre horizontale, qui est fixée transversalement aux cloisons et qui est encastrée dans un logement correspondant de la tôle du caisson. Dans une variante intéressante de cette forme de réalisation de l'invention, la poutre est en métal et fixée à un conducteur électrique traversant la tôle du caisson pour être raccordé à une source de courant.

Dans une forme de réalisation supplémentaire du caisson selon l'invention, une partie au moins des cloisons précitées sont constituées par des ailes latérales de profilés en U ou en V, qui sont fixés à la plaque d'électrode le long de leur partie médiane. Cette variante de l'invention présente ainsi la particularité que les canaux verticaux précités sont alternativement en communication avec la plaque d'électrode et isolés de celle-ci. Toutes autres choses égales, cette variante de l'invention optimise la circulation du gaz et de l'électrolyte dans la chambre, en y réalisant une alternance de courants ascendants d'une émulsion de gaz dans l'électrolyte et descendant d'électrolyte dégazé. Cette circulation interne dans la chambre est favorable à l'évacuation du gaz produit à l'électrode et, par voie de conséquence, homogénéise les conditions chimiques et électrochimiques dans le caisson et réduit la pression dans celui-ci.

L'invention concerne également un électrodialyseur comprenant, entre deux caissons d'extrémités, conformes à l'invention, une alternance de membranes verticales, sélectivement perméables aux ions et de cadres verticaux.

Dans l'électrodialyseur selon l'invention, les membranes échangeuses d'ions peuvent comprendre des membranes sélectivement perméables aux cations, des membranes sélectivement perméables aux anions et/ou des membranes bipolaires.

Dans l'électrodialyseur selon l'invention, les membranes échangeuses d'ions et les cadres qui sont interposés entre elles définissent des compartiments d'électrodialyse qui sont en communication avec des conduits d'admission et des conduits d'évacuation d'électrolytes. Le nombre de compartiments n'est pas critique et peut généralement s'élever à plusieurs centaines.

Dans une forme de réalisation particulière de l'invention, l'électrodialyseur comprend une membrane sélectivement perméable aux ions (de préférence aux cations) sur la plaque d'électrode de chaque caisson.

L'électrodialyseur selon l'invention trouve diverses applications qui sont bien connues dans les techniques de l'électrodialyse. Il trouve une utilisation spécialement avantageuse pour la fabrication de solutions aqueuses d'hydroxyde de sodium au départ de solutions aqueuses de sels de sodium tels que du chlorure de sodium, du carbonate de sodium, du phosphate de sodium ou du sulfate de sodium.

L'invention concerne dès lors aussi l'utilisation de l'électrodialyseur selon l'invention, défini ci-dessus, pour l'électrodialyse de solutions aqueuses de chlorure de sodium.

Des particularités et détails de l'invention vont ressortir de la description suivantes des dessins annexés.

La figure 1 est une vue éclatée, en section longitudinale, verticale, d'une forme de réalisation de l'électrodialyseur selon l'invention.

La figure 2 montre un détail de l'électrodialyseur de la figure 1, en coupe selon le plan II-II de la figure 1.

Dans ces figures, des mêmes notations de référence désignent des éléments identiques.

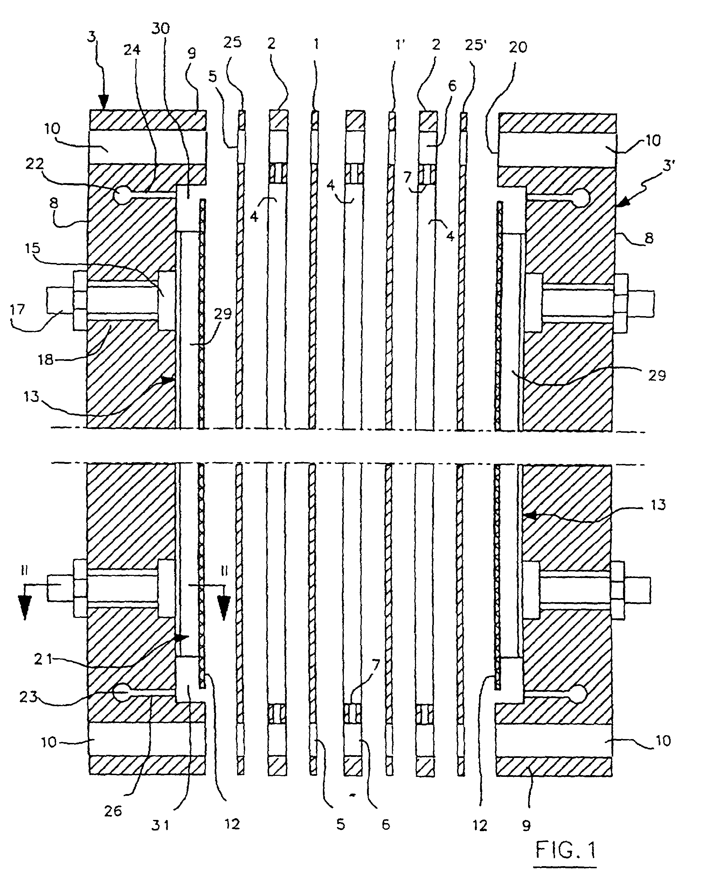

L'électrodialyseur représenté à la figure 1 comprend, de manière connue en soi, des membranes sélectivement perméables aux ions 1 et 1', disposées verticalement et alternant avec des séparateurs verticaux 2, entre deux caissons d'extrémités 3 et 3'. Des membranes sélectivement perméables aux cations 25 et 25' séparent chaque caisson d'extrémité 3, 3', d'un séparateur 2.

Les séparateurs 2 ont pour fonction de délimiter, entre les membranes 1, 1', 25 et 25', des compartiments d'électrodialyse 4. Ils peuvent être par exemple du type de ceux décrits dans les brevets US-A-4233146 et US-A-4737260.

Les membranes 1, 1', 25 et 25' et les séparateurs 2 sont percés, dans leur parties supérieure et inférieure, d'ouvertures 5 et 6 formant des conduits rectilignes pour la circulation d'électrolytes destinés à alimenter les compartiments d'électrodialyse 4. Des tubes 7 percés dans les séparateurs 2, réalisent la communication entre ces conduits et les compartiments d'électrodialyse 4.

Les membranes 1, 1', 25 et 25' et les séparateurs 2 sont empilés et comprimés entre les deux caissons d'extrémités 3 et 3' au moyen de tirants, non représentés.

Conformément à l'invention, les caissons d'extrémités 3 et 3' comprennent une tôle verticale 8 présentant un rebord périphérique en saillie 9. Le rebord 9 forme de la sorte un cadre à la périphérie de la tôle. Ce cadre 9 est percé d'ouvertures 10 dans le prolongement des ouvertures 5 et 6. Ces ouvertures 10 sont destinées à être raccordées à des collecteurs d'électrolytes pour l'alimentation des compartiments d'électrodialyse 4.

La tôle verticale 8 et le cadre périphérique 9 définissent une cavité verticale dans laquelle est logée une électrode. Celle-ci comprend une plaque métallique verticale ajourée 12 disposée vis-à-vis de la tôle 8 et écartée de celle-ci, de manière à délimiter une chambre 21 avec la tôle 8 et le rebord périphérique 9 de celle-ci. La plaque 12 est avantageusement située dans l'alignement de la face libre 20 du cadre 9. De cette manière, dans l'électrodialyseur, la plaque d'électrode 12 sert de support à la membrane sélectivement perméable 25 (25').

Sur sa face orientée vers la tôle 8, la plaque 12 porte des profilés métalliques verticaux 13, uniformément répartis sur la largeur de la plaque 12. Les profilés 13 sont formés chacun d'un feuillard vertical, plié en forme de U, de manière à présenter la forme d'une gouttière. Ils sont soudés à la plaque 12 le long de la partie médiane axiale 14 du U et leurs ailes latérales 29 prennent appui contre la tôle 8, de sorte que la chambre 21 soit compartimentée en une série de canaux verticaux 27 et 28. La plaque d'électrode 12 et ses profilés 13 sont supportés dans le caisson 3 (3') au moyen de poutres horizontales 15 qui sont soudées aux cloisons 29 et qui sont encastrées dans des logements correspondants de la tôle 8. Les poutres 15 sont soudées transversalement à des barreaux métalliques 17 traversant des orifices 18 percés dans la tôle 8. Les barreaux 17 sont destinés à être raccordés à une source de courant continu pour assurer le fonctionnement de l'électrodialyseur.

Les profilés 13 s'étendent sur une partie seulement de la hauteur de la plaque d'électrode 12, de manière que les zones supérieure 30 et inférieure 31 de la chambre 21 ne soient pas cloisonnées.

Des conduits 22 et 23 percés dans la tôle 8 communiquent respectivement avec les parties non cloisonnées 30 et 31 de la chambre 21 par l'intermédiaire de tuyaux 24 et 26. Ils sont destinés à réaliser une circulation d'électrolyte dans la chambre 21.

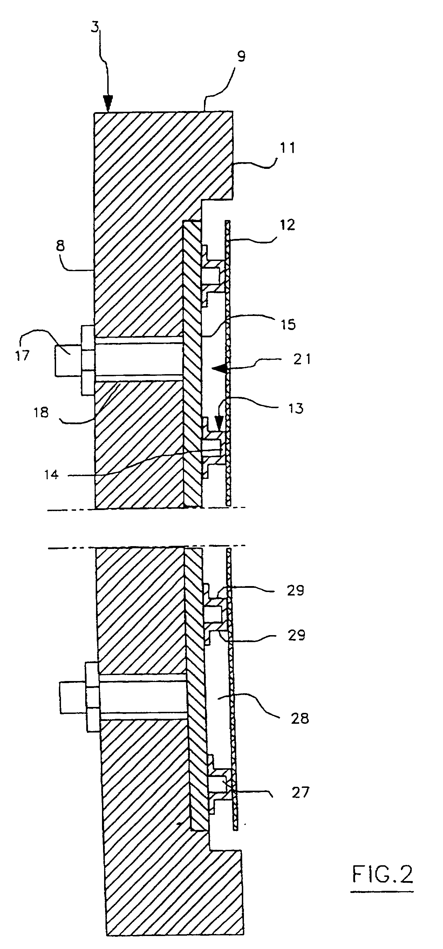

Le fonctionnement de l'électrodialyseur qui vient d'être décrit en référence aux figures 1 et 2 va être explicité dans une utilisation pour l'électrodialyse d'une solution aqueuse de chlorure de sodium. Dans cette application, la membrane 1 est une membrane sélectivement perméable aux cations et la membrane 1' est une membrane bipolaire. Cette dernière est disposée dans l'électrodialyseur de manière que sa face sélectivement perméable aux anions soit dirigée vers la membrane sélectivement perméable aux cations 1.

Pendant le fonctionnement de l'électrodialyseur, les barreaux 17 du caisson 3 sont raccordés à la borne positive d'une source de courant continu et les barreaux 17 du caisson 3' sont raccordés à la borne négative de la source de courant. De l'eau est introduite dans le compartiment 4 entre la membrane bipolaire 1' et la membrane cationique 1 et une solution aqueuse de chlorure de sodium est introduite dans le compartiment 4 entre la membrane bipolaire 1' et la membrane cationique 25' et dans le compartiment 4 entre les membranes cationiques 1 et 25. On introduit par ailleurs de l'eau ou une solution aqueuse diluée d'hydroxyde de sodium dans les chambres d'électrolyse 21 des caissons d'extrémités 3 et 3', via les conduits 23 et les tubes 26 de ces caissons. Sous l'effet du courant électrique, l'eau subit une électrolyse sur les plaques d'électrodes 12, dans les canaux 28, avec formation d'oxygène dans le caisson 3 et d'hydrogène dans le caisson 3'. Il s'établit dans les chambres 21 des caissons 3 et 3' une circulation interne d'électrolyte, comprenant des courants ascendants d'une émulsion aqueuse dans les canaux 28 et des courants descendants d'électrolyte dégazé dans les canaux 27. Le gaz séparé de l'électrolyte dans la partie supérieure des chambres 21 est évacué de celles-ci par les conduits 22, via les tubes 24.

## Revendications

1. Caisson d'extrémité d'un électrodialyseur, comprenant une tôle verticale (8), un cadre vertical (9) qui définissent entre-eux une cavité qui se trouve en communication avec un conduit d'admission (23, 26) et un conduit d'évacuation (22, 24) d'électrolyte et contient une électrode comprenant une plaque d'électrode métallique verticale ajourée (12), disposée en regard de la tôle (8) et en retrait de celle-ci en sorte de ménager entre la tôle (8), la plaque (12) et le cadre (9) une chambre (21) compartimentée en canaux verticaux (27, 28) par des cloisons verticales (29), des conduits (22, 23, 24, 26) débouchant dans ladite chambre (21), **caractérisé en ce que** la matière des cloisons verticales (29) est sélectionnée parmi les matières non conductrices de l'électricité et les matières métalliques présentant une surtension supérieure à celle de la plaque d'électrode (12).

2. Caisson selon la revendication 1, **caractérisé en ce que** les cloisons (29) sont en métal et sont fixées, d'une part à la plaque d'électrode (12) et, d'autre part à des amenées de courant qui traversent la tôle (8) du caisson.

3. Caisson selon la revendication 1, **caractérisé en ce que** les cloisons (29) sont fixées, d'une part à la plaque d'électrode (12) et, d'autre part à au moins une poutre horizontale (15), qui est fixée transversalement aux cloisons (29) et qui est encastrée dans un logement correspondant de la tôle (8) du caisson.

4. Caisson selon la revendication 3, **caractérisé en ce que** les cloisons (29) et la poutre (15) sont en métal et **en ce que** la poutre (15) est fixée à au moins un barreau métallique (17) traversant la tôle (8) et servant d'amenée de courant.

5. Caisson selon l'une quelconque des revendications 1 à 4, **caractérisé en ce qu'**une partie au moins des cloisons (29) précitées sont constituées par des ailes latérales (29) de profilés (13) en U ou en V, qui sont fixés à la plaque d'électrode (12) le long de leur partie médiane (14).

6. Electrodialyseur, comprenant une alternance de membranes verticales (1, 1') sélectivement perméables aux ions et de cadres verticaux (2), entre deux caissons d'extrémités (3, 3'), **caractérisé en ce que** les caissons d'extrémités (3, 3') sont conformes à l'une quelconque des revendications 1 à 5.

7. Electrodialyseur selon la revendication 6, **caractérisé en ce qu'**il comprend une membrane (25, 25') sélectivement perméable aux ions sur la plaque (12) de chaque caisson (3, 3').

8. Electrodialyseur selon la revendication 7, **caractérisé en ce que** la membrane sélectivement perméable aux ions (25, 25'), qui se trouve sur la plaque (12) de chaque caisson (3, 3') est une membrane sélectivement perméable aux cations.

9. Utilisation de l'électrodialyseur selon l'une quelconque des revendications 7 à 8 pour l'électrodialyse de solutions aqueuses de chlorure de sodium.

## Patentansprüche

1. Endkasten für eine Elektrodialysevorrichtung, umfassend ein vertikales Blech (8), einen vertikalen Rahmen (9), die zwischen sich einen Hohlraum begrenzen, der sich in Verbindung mit einer Elektrolyteinlassleitung (23, 26) und einer Elektrolytauslassleitung (22, 24) befindet und eine Elektrode enthält, die eine durchbrochene vertikale metallische Elektrodenplatte (12) umfasst, welche gegenüber von dem Blech (8) und von diesem zurückgesetzt angeordnet ist, so dass zwischen dem Blech (8), der Platte (12) und dem Rahmen (9) eine Kammer (21) ausgespart ist, die durch vertikale Zwischenwände (29) in vertikale Kanäle (27, 28) unterteilt ist, wobei die Leitungen (22, 23, 24, 26) in die besagte Kammer (21) münden, **dadurch gekennzeichnet, dass** der Werkstoff der vertikalen Zwischenwände (29) unter nicht-stromleitenden Werkstoffen und metallischen Werkstoffen, die eine Überspannung zeigen, welche größer ist als diejenige der Elektrodenplatte (12), ausgewählt ist.

2. Kasten nach Anspruch 1, **dadurch gekennzeichnet, dass** die Zwischenwände (29) aus Metall sind und einerseits an der Elektrodenplatte (12) und andererseits an Stromzuleitungen befestigt sind, die das Blech (8) des Kastens durchsetzen.

3. Kasten nach Anspruch 1, **dadurch gekennzeichnet, dass** die Zwischenwände (29) einerseits an der Elektrodenplatte (12) und andererseits an mindestens einem horizontalen Träger (15) befestigt sind, der quer verlaufend an den Zwischenwänden (29) befestigt ist und der in eine entsprechende Aufnahme des Blechs (8) des Kastens eingebettet ist.

4. Kasten nach Anspruch 3, **dadurch gekennzeichnet, dass** die Zwischenwände (29) und der Träger (15) aus Metall sind, und dass der Träger (15) an mindestens einem das Blech (8) durchsetzenden und als Stromzuleitung dienenden Metallstab (17) befestigt ist.

5. Kasten nach einem der Ansprüche 1 bis 4, **dadurch gekennzeichnet, dass** mindestens ein Teil der vorgenannten Zwischenwände (29) von seitlichen Schenkeln (29) von U- oder V-Profilen (13) gebildet wird, die entlang ihres mittleren Teils (14) an der Elektrodenplatte (12) befestigt sind.

6. Elektrodialysevorrichtung, umfassend eine abwechselnde Folge von vertikalen Membranen (1, 1'), die für Ionen selektiv durchlässig sind, und vertikalen Rahmen (2), zwischen zwei Endkästen (3, 3'), **dadurch gekennzeichnet, dass** die Endkästen (3, 3') gemäß einem der Ansprüche 1 bis 5 ausgebildet sind.

7. Elektrodialysevorrichtung nach Anspruch 6, **dadurch gekennzeichnet, dass** sie eine für Ionen selektiv durchlässige Membran (25, 25') auf der Platte (12) von jedem Kasten (3, 3') umfasst.

8. Elektrodialysevorrichtung nach Anspruch 7, **dadurch gekennzeichnet, dass** die für Ionen selektiv durchlässige Membran (25, 25'), die sich auf der Platte (12) jedes Kastens (3, 3') befindet, eine für Kationen selektiv durchlässige Membran ist.

9. Verwendung der Elektrodialysevorrichtung nach einem der Ansprüche 7 bis 8 für die Elektrodialyse von wässrigen Natriumchloridlösungen.

## Claims

1. Electrodialysis device end box comprising a vertical sheet (8) and a vertical frame (9) which between them define a cavity which is in communication with an electrolyte inlet duct (23, 26) and an electrolyte outlet duct (22, 24) and contains an electrode comprising a perforated vertical metal electrode plate (12) arranged facing the sheet (8) and set back from the latter so as to form, between the sheet (8), the plate (12) and the frame (9), a chamber (21) that is compartmentalized into vertical channels (27, 28) by vertical partitions (29), ducts (22, 23, 24, 26) opening into the said chamber (21), **characterized in that** the material of the vertical partitions (29) is selected from electrically non-conducting materials and metallic materials having an overvoltage higher than that of the electrode plate (12).

2. Box according to Claim 1, **characterized in that** the partitions (29) are made of metal and are fixed, on the one hand, to the electrode plate (12) and, on the other hand, to current supplies which pass through the sheet (8) of the box.

3. Box according to Claim 1, **characterized in that** the partitions (29) are fixed, on the one hand, to the electrode plate (12) and, on the other hand, to at least one horizontal beam (15) which is fixed transversely to the partitions (29) and which is set into a corresponding housing in the sheet (8) of the box.

4. Box according to Claim 3, **characterized in that** the partitions (29) and the beam (15) are made of metal and **in that** the beam (15) is fixed to at least one metal bar (17) passing through the sheet (8) and acting as a current supply.

5. Box according to any one of Claims 1 to 4, **characterized in that** at least some of the aforementioned partitions (29) consist of lateral flanges (29) of U-shaped or V-shaped section pieces (13) which are fixed to the electrode plate (12) along their central part (14).

6. Electrodialysis device comprising an alternation of vertical membranes (1, 1') which are selectively permeable to ions, and of vertical frames (2), between two end boxes (3, 3'), **characterized in that** the end boxes (3, 3') are in accordance with any one of Claims 1 to 5.

7. Electrodialysis device according to Claim 6, **characterized in that** it comprises a membrane (25, 25') which is selectively permeable to ions on the plate (12) of each box (3, 3').

8. Electrodialysis device according to Claim 7, **characterized in that** the membrane (25, 25') which is selectively permeable to ions and that lies on the plate (12) of each box (3, 3') is a membrane that is selectively permeable to cations.

9. Use of the electrodialysis device according to either one of Claims 7 and 8 for the electrodialysis of aqueous sodium chloride solutions.
